# EUROPEAN PATENT SPECIFICATION

(11) **EP 1 869 357 B1**
(45) Date of publication and mention of the grant of the patent: **24.08.2011**
(21) Application number: 06733435.9
(22) Date of filing: 05.04.2006
(51) Int. Cl.: F16L 55/1645, B05B 13/06, B05C 7/08

(54) **A ROTATABLE NOZZLE ARRANGEMENT**
DREHBARE DÜSENANORDNUNG
DISPOSITION DE BUSE ROTATIVE

(30) Priority: 07.04.2005 SE 0500770
(43) Date of publication of application: 26.12.2007
(73) Proprietor: PROLINE AB, 802 91 Gävle (SE)
(72) Inventor: EDSTRÖM, Sten, S-804 29 Gävle (SE)
(74) Representative: Lindblom, Erik J
(86) International application number: PCT/SE2006/050056
(87) International publication number: WO 2006/107268

(56) References cited:
- DE-A1- 10 043 673
- GB-A- 1 121 342
- SE-C2- 524 741
- US-A- 3 196 826
- US-A- 5 951 761

## Description

### FIELD OF THE INVENTION

The present invention relates generally to a rotatable arrangement that includes a nozzle and a bearing unit or a motor unit, whose rotatable axle is co-ordinated with the nozzle.

The nozzle is structured to distribute, cast or sling a curable viscous plastic material against the interior surface of a tubular section when placed within and rotated within said section, such as to create and build-up a viscous coating or lining of plastic material of a given thickness on the inner surfaces of said tubular section.

The rotatable nozzle is co-ordinated with a bearing unit or a motor unit adapted for a common axial movement through the tubular section.

In the case of small or delicate tubular dimensions there is preferably used only one bearing unit having fastened thereto a Bowden-cable, while in the case of larger or coarser tubular dimensions there is used solely one motor unit, such as a motor unit, or power unit, driven by compressed air.

However, the axial displacement movement will preferably be affected with the aid of a device in the form of an elastic or resilient disc centred in the tubular section with the aid of the nozzle, via the bearing unit and/or the motor unit, wherewith said nozzle may be designed and formed to function as a small magazine for part of the viscous plastic material fed by a pump, in a somewhat pulsating fashion, towards and up to the nozzle, wherewith the magazine and the portion of plastic material stored therein is caused to rotate by said nozzle about a nozzle rotational axle in response to centrifugal forces active on the curable viscous plastic material so that said material will be feed and sling from the nozzle.

### Definitions and explanations

It can be mentioned in this context that by "**viscous plastic material**" is meant primarily a curable plastic material that has a consistency corresponding to a "porridge-like consistency".

More specifically the plastic material will preferably be admixed with reinforcing material, preferably in the form of glass flakes.

By "**pipe**" and "**tubular section**" is meant any form of tubular section onto which viscous plastic material is able to fasten and coat the inner surfaces of said section and thereafter harden or cure to form a durable lining. By pipes and tubular sections is meant liquid transporting conductors, such as tap water pipes and gas transporting conductors whose inner surfaces include a hardened or cured liquid tight or gas tight plastic lining.

The invention is particularly intended for providing corroded drainage pipes made of plastic or metal, particularly iron, in buildings, or such drainage pipes that are defected in some other way, with a protective and reinforced lining.

By "**coating**" is meant a coating of viscous plastic material that has been slung onto an inner surface of a tubular section by a rotating nozzle and has fastened to said inner surface.

By "**lining**" is meant a cured or hardened coating on the inner surface of said tubular section or pipe.

It will also preferably be taken into account that a viscous plastic material, in the form of plastic material sub-units, can be conveniently fed towards and to a nozzle that includes a larger or smaller cavity which forms initially a limited magazine for plastic material sub-units in the absence of rotary motion, these sub-units being caused to rotate quickly in response to rotary movement of the nozzle, by the friction that becomes active against the inner wall part of the nozzle, among other things.

The expression "**plastic material sub-units**" shall be understood as meaning a sluggishly flowing, although running, plastic mass that shall be considered to consist of a number of mutually sequential fictive sub-units or fractions, and that the expression "**coating**" shall be understood as a coating that comprises a number of such sub-units slung out by the nozzle.

As these plastic material sub-units meet the rotatable nozzle, a first plastic material sub-unit adjacent the inner surface of the nozzle will be imparted first rotational motion by frictional forces or vanes, this rotational motion of the sub-units subsequently accelerating.

When these first plastic material sub-units are imparted said first rotary movement, adjacent or subsequent second plastic material sub-units will be imparted a second rotary motion as a result of the viscosity of and the internal friction created by said plastic material, although the second rotary motion will be slightly slower than the speed at which said first plastic material sub-units are rotated and the first rotary motion thereof.

The plastic material sub-units are caused to produce different "**layers**" at mutually different rotational velocities, with said rotational speeds increasing towards the nozzle periphery and/or the upper edge of said nozzle, and decreasing towards a nozzle rotational centre.

It will be understood that these "**layers**" are not clearly discernable in practical applications. However, such layers are truly obtained and the present invention is based on utilizing such layers.

It will also be understood that each plastic material sub-unit, plastic particles and/ or reinforcing particles caused to rotate will be influenced by centrifugal forces.

In this regard, the plastic material sub-units will be forced outwards and those plastic material sub-units located within the magazine will then be forced out towards the inner surface of the nozzle, and in the presence of axially related slots will be forced through these slots in the nozzle and therewith form "**particle jets**" corresponding to the configuration of said slots, wherewith said plastic material will be caused by the centrifugal forces to exit from the nozzle at right angles or at least generally at right angles, wherewith said jets will rotate at a speed corresponding to the speed of rotation or the peripheral speed of the outer peripheral wall portion of the nozzle.

Mutually sequential collections or jets of plastic material sub-units will therewith be spread in a "**hollow cylindrical or spray-like pattern**", wherewith said collection or jets of said sub-units will have a high rotational speed and a low material concentration or density, with the plastic material sub-units being spread and slung-out in a helical or spiral form.

It is also proposed in accordance with the invention that the plastic material sub-units are delivered to a nozzle cavity in a surplus quantity in relation to the outfeed that takes place via particle jets through said slots, this surplus material being forced outwards primarily by centrifugal forces and passing over an upper edge of a nozzle wall portion.

A "**hollow cylindrically configured**" upper and initial spread of a collection of plastic material sub-units is allocated a lower rotational speed and a higher material concentration or density than a subsequent coating.

By "**high (plastic) material density**" is meant that a surplus of plastic material is slung out as a hollow-cylindrical collection or configuration over the edge of a rotating nozzle.

By "**low (or lower) (plastic) material density**" is meant that a plastic material is slung out in a hollow cylindrical pattern of plastic sub-units through slots in a wall portion of the rotating nozzle.

The rotatable nozzle arrangement, according to the present invention, utilizes a bearing unit and a nozzle, which have a chosen diameter that is as small as possible in practice for use in a tubular section of very small diameter, such as a diameter corresponding to and exceeding 25 mm, although such nozzle arrangements can be used with coarser tubular sections such as sections that have a diameter of up to 75 and 100 mm, although it is preferred to use a centring device in the case of these coarser tubular sections.

It is to be noted that the expression high or low material concentration or density does not refer to the density of the used plastic material and/or its sub-units per se.

High material density is used to express an excess flow of plastic material passing over the upper edge of the nozzle. When this plastic material is leaving said upper edge it is distributed as a disc with lesser and lesser material density, related to the radius of the disc. A disc core can be illustrated as exposing a thinner and thinner disc thickness from the nozzle.

The slots in the nozzle use low material density to express the total amount of plastic material spread. When this plastic material is leaving said slots as particle jets the plastic material is distributed in small quantities with lesser and lesser material density, related to the radius of the slots. Due to the radial distance between adjacent slots the plastic material is spread or slung as a disc build up by a number of particle jets. A disc core can be illustrated as exposing a thinner and thinner disc thickness from the slots in said nozzle.

### BACKGROUND OF THE INVENTION

Several different embodiments of methods, arrangements and constructions related to the technical field mentioned above are known to the art.

By way of a first example of the earlier standpoint of techniques and the technical field to which the present invention relates can be made to the arrangement that is illustrated and described in Patent publication US-A-5 951 761 forming the basis of claim 1.

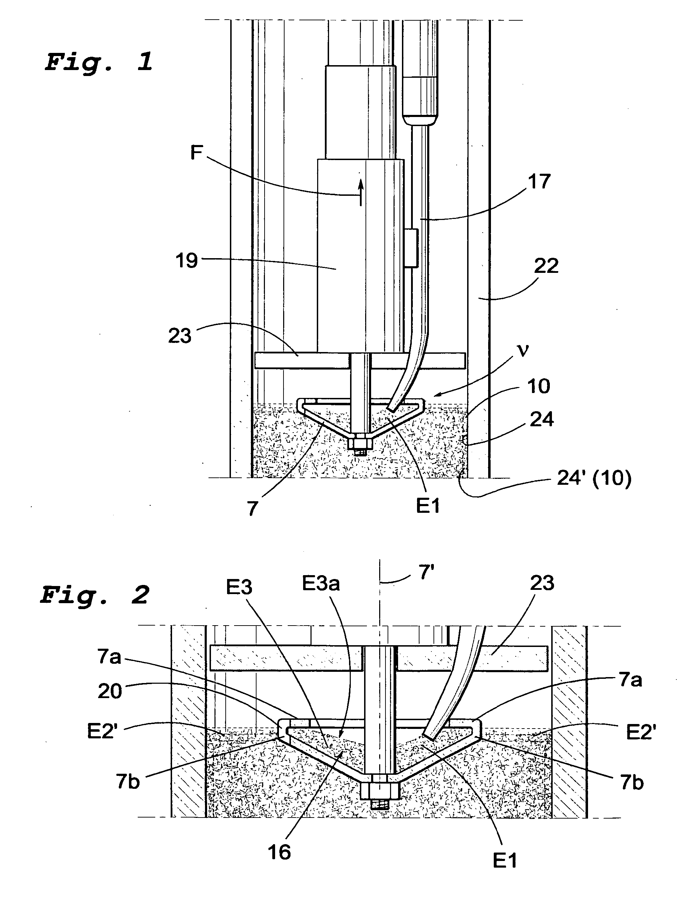

This arrangement and its described *modus operandi* will be described in more detail hereinafter with reference to the accompanying Figures 1 and 2.

The described and illustrated form of a nozzle used in this known arrangement includes narrow and small axial oriented slots (20) illustrated more closely in the figures and clearly described *inter alia* in column 2, lines 53 to 67, through which slots a collected viscous and curable plastic material in the nozzle shall exit through these slots so that said material can be sling out onto the inner wall surfaces of the pipe in the form of "jets" or "particle jets", where each of these jets will be slung out to form a logarithmic helix and therewith form a hollow-cylindrical-configured collection or accumulation.

The occurrence of small particle jets in the hollow-cylindrical-configured accumulation means that the accumulation will have a small or low plastic material density.

The illustrated rotatable nozzle has a larger diameter than the diameter of the bearing unit, by a factor of 1.4.

The nozzle has the form of a straight truncated cone with a cone angle of 135°.

The contents of the prior publication US-A-3 279 427 are also relevant with regard to the earlier standpoint of techniques, this publication illustrating and describing an arrangement for providing a concrete pipe with an internal lining with the use of a plastic material mixed with sand.

In this case the nozzle is positioned alongside a pneumatically driven motor (8) and is driven via a pinion wheel arrangement (4, 6).

Patent publication EP-A2-0 781 606 teaches an arrangement for coacting and lining the interior surface of a pipe (1).

The arrangement includes a rotatable nozzle (10), which is displaced along the inside of the pipe (1), and also includes means (12) for feeding a stream of viscous plastic material towards the nozzle (10), whereby the plastic material is slung out from the nozzle periphery solely via an upper edge of the nozzle (10) and under the influence of centrifugal forces, onto the inner wall part of the pipe (1), whereafter the thus created viscous coating is allowed to harden.

The nozzle (10) has the form of a straight frustrated cone with a cone angle of about 90°.

It is shown that sub-units of the plastic material slung out in this way via the upper edge of the nozzle (10) will move in a path that concurs to the shape of a "logical helix" and co-ordinating with or formed as a hollow cylindrical agglomeration or spray in which the plastic material sub-units will occur at a high material density.

Patent publication US-A-3 459 586 teaches a method and an arrangement for applying a coating to an internal surface with the aid of a number of tooth-like projections.

More specifically, the rotatable nozzle arrangement (12) is co-ordinated with a rotatable axle (14), wherein the nozzle (35) is orientated by the side of the drive axle (14) and is secured by a collar (36).

Prior patent publication DE-A1-198 05 027 teaches an arrangement for distributing a viscous material along the inner surface of a hollow body with the aid of a rotated nozzle that includes openings (8).

The nozzle (4) includes openings or gaps orientated radially with respect to the rotational axle through which grease is slung out, wherein a grease-feeding pipe opens out towards the central part of the nozzle (4).

Prior patent publication GB-A-2 218 773 teaches an arrangement where the inner surface of a tubular section shall be coated with an insulating material (2), such as polyurethane foam, and thereafter coated with a mechanically and thermally stable material (3), such as epoxy resin.

The prior art discloses the following patent publications DE-A1-10 043 673, SE-C2-524 741 and GB-A-1 121 342.

The special features associated with the present invention are strongly related to the technical deliberations that are expressed in the International Patent Application Serial Number PCT/SE2004/001692**.**

The invention is also based on the technical deliberations that are described and illustrated more closely in the Swedish Patent Application 05 00678-8**.**

### SUMMARY OF THE PRESENT INVENTION

### TECHNICAL PROBLEMS

When taken into consideration the technical deliberations that a person skilled in this particular art must make in order to provide a solution to one or more technical problems that he/she encounters, it will be seen that it is necessary initially to realize the measures and/or the sequence of measures that must be undertaken to this end on the one hand, and to realize which means is/are required in solving one or more of said problems on the other hand. On this basis it will be evident that the technical problems listed below are highly relevant to the development of the present invention.

When considering the early standpoints of technique, as described above, it will be seen that a technical problem resides in the ability to realize the significance of, the advantages associated with and/or the technical measures and deliberations that will be required in creating a rotatable nozzle arrangement, exposing small external dimensions and with a limited axial length, including the use of a bearing unit or a motor unit and a nozzle co-ordinated therewith so as to enable the creation of means for slinging, throwing or spreading a viscous plastic material onto an inner surface of a tubular section such as to form a viscous coating, with the aid of a wire arrangement (Bowden-cable-power source) or a motor-driven power source.

Another technical problem resides in the ability to realize the significance of, the advantages associated with and/or the technical measures and deliberations that will be required in forming a rotatable nozzle arrangement so that it is able to enclose a volume of plastic material, corresponding to a chosen viscosity of plastic material, and therewith adapting the depth of a conical wall part of the nozzle.

Another technical problem resides in the ability to realize the significance of, the advantages associated with and/or the technical measures and deliberations that will be required in order to allow a cone angle for a nozzle-associated wall part to be chosen within the range of 30 to 60°, such as between 40 and 50°.

A technical problem also resides in the ability to realize the significance of, the advantages associated with and/or the technical measures and deliberations that will be required in allowing said wall part, that has a straight truncated conical shape, to include a number of narrow through-penetrating slots adapted to create a hollow cylindrical collection of small oriented plastic material sub-units of a low total material density and structured as particle jets.

A technical problem also resides in the ability to realize the significance of, the advantages associated with and/or the technical measures and deliberations that will be required in allowing said slots through said wall part to be structured so as to converge from a bearing unit or a motor unit towards an apex of a conical wall part and therewith conform to the generatrices of said conical configuration.

A technical problem resides in the ability to realize the significance of, the advantages associated with and/or the technical measures and deliberations that will be required in allowing the periphery of the bearing unit or the motor unit to be adapted to align with the periphery of the upper and open edge portion of the nozzle.

A technical problem also resides in the ability to realize the significance of, the advantages benefited by and/or the technical measures and deliberations that will be required in allowing the surface of the bearing unit or the motor unit, that faces towards the nozzle, to be flat.

Another technical problem resides in the ability to realize the significance of, the advantages benefited by and/or the technical measures and deliberations that will be required in allowing the bearing unit surface or motor unit surface, that faces towards the nozzle, to have a slightly bevelled shape or a dished shape.

Another technical problem resides in the ability to realize the significance of, the advantages that are benefited by and/or the technical measures and deliberations that will be required in providing between said bearing unit surface or said motor unit surface, that faces towards the nozzle and an upper open edge portion of the nozzle, a gap which is at least greater than 2.0 mm such that the plastic material sub-units slung from the nozzle will form an upper hollow cylindrical and homogenous collection of sub-units of high material density.

Another technical problem resides in the ability of realizing the significance of, the advantages benefited by and/or the technical measures and deliberations that will be required in allowing said gap to be smaller than 10 mm.

Another technical problem resides in the ability to realize the significance of, the advantages benefited by and/or the technical measures and deliberations that will be required in allowing said gap to provide a free passage to material sub-units without said sub-units fastening to, or at least essentially not fastening to, the bearing unit or the motor unit so that the plastic material sub-units slung from the nozzle will form a hollow cylindrical configuration of collected plastic material sub-units of high material density against the inner surface of the tubular section so as to form a thick viscous coating and subsequent lining.

Another technical problem resides in the ability to realize the significance of, the advantages benefited by and/or the technical measures and deliberations that will be required in allowing the outer diameter of the bearing unit, the motor unit and/or the nozzle to have a size between 15 and 30 mm, preferably about 20 mm, so that more delicate or thinner tubular sections can be provided internally with a viscous coating in the absence of a disc-like centring device, and to enable coarser tubular sections to be coated internally with a viscous material, which is allowed to harden so as to form a lining, with the aid of one such centring device or element.

Another technical problem resides in the ability to realize the significance of, the advantages that are benefited by and/or the technical measures and deliberations that are required in allowing plastic material sub-units to be slung from the nozzle solely by passing a lower part of said gap close to the nozzle.

Another technical problem resides in the ability to realize the significance of, the advantages that are benefited by and/or the technical measures and deliberations that will be required in allowing a first chosen amount of sub-part of the total amount of plastic material slung out from the nozzle within an upper hollow-cylindrical-shaped collection of homogenous material sub-units of high density to pass through said gap and in allowing a second chosen amount of sub-part of the total plastic material slung from the nozzle in a lower hollow-cylindrical-shaped collection of plastic material sub-units of low material density to pass through said penetrating slots.

A technical problem also resides in the ability to realize the significance of, the advantages that are benefited by and/or the technical measures and deliberations that will be required in allowing said through-penetrating slots provided in the wall part of the nozzle shaped as a straight truncated cone to extend from or in the vicinity of an open upper widened edge part towards and preferably up to a bottom part so as to increase therewith the percentage of plastic material sub-units that pass through said slots and are slung-out from the nozzle through said slots.

Another technical problem resides in the ability to realize the significance of, the advantages that are benefited by and/or the technical measures and deliberations that will be required in allowing the number of slots to be more than four and normally less than ten.

Another technical problem resides in the ability to realize the significance of, the advantages that are benefited by and/or the technical measures and deliberations that will be required in allowing the number of slots provided, the length of said slots and/or the width of the slots, together with the chosen rotational speed and their respective distance from the rotational centre of the nozzle to constitute parameters for regulating the percentage of the plastic material slung from the nozzle and forming the hollow-cylindrical-shaped collection of plastic material sub-units of low material density.

Another technical problem resides in the ability to realize the significance of, the advantages that are benefited by and/or the technical measures and deliberations that will be required in allowing a feeding pipe intended for plastic material sub-units to extend through and be arranged on one side of said bearing unit.

Another technical problem resides in the ability to realize the significance of, the advantages that are benefited by and/or the technical measures and deliberations that will be required in allowing said bearing unit to be fastened to a Bowden-cable-arrangement, whose casing is fastened to the bearing unit and the wire of which is fastened to a nozzle-coordinated axle section or trunnion.

Another technical problem resides in the ability to realize the significance of, the advantages that are benefited by and/or the technical measures and deliberations that will be required in allowing the nozzle to include a cavity that functions as a small magazine and that has a depth conforming to and smaller than the diameter of the open upper edge part of the nozzle.

Another technical problem resides in the ability to realize the significance of, the advantages that are benefited by and/or the technical measures and deliberations that will be required in allowing the bearing unit, the nozzle and/or the Bowden-cable-arrangement to vibrate, by creating an adapted clearance between the wire used and a wire encasing element.

### SOLUTION

The present invention takes as its starting point the earlier standpoint of techniques, mentioned in the introduction, with regard to a rotatable nozzle arrangement that includes a nozzle and a bearing unit or a motor unit, whose rotatable axle is co-ordinated with said nozzle.

The nozzle is adapted to distribute or sling a curable viscous plastic material collected, inter alia, in a magazine in said nozzle onto the interior surface of a tubular section as the nozzle rotates, such as to create and build-up a curable viscous coating on the inner surface of said tubular section to a chosen material thickness.

In order to solve one or more of the technical problems mentioned above, it is proposed, in accordance with the present invention, that the known technology is supplemented by allowing the infeed of plastic material to the nozzle and/or to the magazine to be concentrated towards and against an inner wall part of the nozzle in the form of a straight truncated cone.

By way of proposed embodiments, which lie within the framework of the concept of the invention, it is also proposed that a cone angle of said truncated wall part shall be small and within a well adapted angular range.

It is also proposed that said wall part shall include a number of through-penetrating slots.

These slots shall be structured to converge towards and conform to generatrices for a virtual apex of the straight truncated cone configuration.

It is also proposed, in accordance with the invention, that the diameter of the bearing unit or the motor unit shall conform to or be smaller than a wider open edge part of the nozzle.

It is particularly proposed, in accordance with the invention, that the nozzle surface, that faces towards the bearing unit or the motor unit, shall be a chosen planar surface and extend at right angles to a rotating axle.

However, the surface of the bearing unit or the motor unit, that faces towards the nozzle may, alternatively, have a hemispherical or bevelled configuration within the peripheral region of said surface.

It is also proposed that the surface of the bearing unit surface that faces towards the nozzle and the open edge part of the nozzle are mutually spaced to define a gap that will at least be greater than 2.0 mm and, more specifically, exposing a distance that is less than 10 mm.

It is also proposed, in accordance with the invention, that the bearing unit or the motor unit has a diameter of between 15 and 30 mm, preferably about 20 mm.

Plastic material sub-units, each of high material density, are intended to be slung out through said gap in the form of small hollow-cylindrical-configured accumulations.

An adapted and chosen first percentage of the total plastic material sub-units, each of high material density, shall be able to pass through said gap, whereas a second percentage of the total material sub-units, exposing a low material density, shall be able to pass through said through-penetrating slots.

These through-penetrating slots shall extend from an open upper edge part of the nozzle towards and up to a closed bottom part.

The slots will normally be four in number, although usual fewer than 10.

A feeding pipe, that delivers plastic material sub-units towards and to the nozzle, is adapted to extend through and be orientated by the side of said bearing unit.

The bearing unit is co-ordinated with a Bowden-cable whose casing is fastened to the bearing unit and the wire of which is fastened to an axle section or trunnion co-ordinated with the nozzle.

It is also proposed, in accordance with the invention, that the nozzle includes a cavity, which is intended to function as a magazine, and which has a depth conforming to or smalller than the diameter of an open upper edge-part.

The bearing unit and the nozzle are by means caused to vibrate.

### ADVANTAGES

Those advantages that can be considered primarily characteristic of the present invention and the particularly significant characteristic features thereof reside in the creation of conditions which provide for a rotatable nozzle arrangement, wherein the nozzle has been allotted a small diameter and the bearing unit or motor unit also has been allotted a small diameter.

These two components can be mounted close to one another in a beneficial manner, so as to thereby create conditions which will enable them to pass through even narrow tubular sections, while providing the inner surface of a tubular section with a viscous coating of a chosen plastic material, this coating being allowed to harden so as to result in a rigid lining, which may be a water tight or a gas tight lining.

The invention is also based on allowing the infeed of plastic material and plastic material sub-units into a small nozzle-associated magazine to be concentrated to an inner nozzle-wall part, having the shape of a straight truncated cone, and thereby create conditions for spreading or slinging plastic material sub-units as separate hollow-cylindrical shaped collections that are orientated one above the other, where an upper collection of sub-units of plastic material is caused to pass through a gap formed over the nozzle, exposing a high material density, whereas a lower hollow-cylindrical collection of sub-units, exposing a low material density, is caused to pass through slots in the nozzle at a rotational speed which is higher than that to which the upper collection is subjected.

By selection of the speed at which the nozzle rotates it is possible to select a sub-unit distribution between the plastic material sub-units that pass through the gap between the bearing unit (the motor unit) and the upper peripheral edge of the nozzle, and plastic material sub-units that pass through the underlying slots in the wall part of the nozzle, by appropriate selection of the number of slots, the width of the slots and the height thereof, among other things.

More specifically, it is proposed, in accordance with the invention, that the coating applied to the inner surface of the tubular section shall be built-up in two or more coordinated layers, e.g. a first layer formed by a high material density and a second layer formed by a low material density, where this latter layer is applied with the aid of concentrated particle jet collections or agglomerations.

The primary characteristic features of the present invention are set forth in the characterising clause or section of the accompanying claim 1.

### BRIEF DESCRIPTION OF THE DRAWINGS

The prior art technology and an embodiment at present preferred, comprising the significant characteristic features of the present invention, will now be described in more detail by way of example and with reference to the accompanying drawings, in which;
**Figure 1** illustrates an arrangement, according to Figure 2 of the prior US Patent Specification US-A-5 951 761**,** to which reference signs have been added;
**Figure 2** is an enlarged partial view of a rotatable nozzle, included in the arrangement shown in Figure 1, although the drawing has been supplemented to clarify conditions and requirements associated with the known technology in this case;
**Figure 3** is a perspective view of a rotatable nozzle arrangement wherein the nozzle is driven by a Bowden-cable coupled in and fastened to a bearing unit, and wherein a feeding pipe, intended for the infeed of plastic material sub-units, extends along the side of the Bowden-cable and therewith enables the plastic material sub-units to be fed to the proximity of or against a straight truncated conical shaped wall-part of the nozzle;
**Figure 4** is a side view and a partially sectioned view of the arrangement shown in Figure 3.
**Figure 5** is a somewhat enlarged view of the layered structure of the material collections thrown or slung out by the nozzle onto the inner surface of a tubular section, so as to build-up successively a coating of viscous plastic material, said coating being allowed to harden so as to provide a wear resistant, water tight and/or gas tight lining-forming layer;
**Figure 6** is a side view and partially sectioned view of an alternative arrangement to the arrangement shown in Figure 4;
**Figure 7** is intended to illustrate a first thin hollow-cylindrical collection or gathering of plastic material sub-units that are thrown or slung out by the nozzle in response to a chosen displacement direction, said collection exposing a high material density;
**Figure 8** is intended to illustrate a thicker hollow-cylindrical collection or agglomeration of plastic material sub-units that are slung from the nozzle in a chosen displacement direction, where said collection is exposing a low material density; and
**Figure 9** is a perspective view of a nozzle that includes a small magazine, and includes an edge-related cross-sectional view as an insert to the remainder of the figure.

### DESCRIPTION OF KNOWN TECHNOLOGY

Figures 1 and 2 illustrate a known arrangement for throwing or slinging a curable viscous plastic material onto the interior surface (24) of a tubular section (22) with the aid of a rotating nozzle (7) thereby applying, via a hardening process, a lining-forming wear-resistant layer of plastic material (24'; (10)), wherein the rotatable nozzle (7) is co-ordinated with a bearing unit (19), structured for a common axial movement of displacement (F) through said tubular section (22).

This displacement (F) is effected in this case with the aid of an elastic or resilient element (23), which centres the nozzle (7) and/or the bearing unit (19) inside the tubular section (22).

The nozzle (7) is structured to function as a magazine (16) for the viscous plastic material and its sub-units (E1), these sub-units being fed down through a feeding pipe (17) to the nozzle (7) and its rotational centre (7') and are caused to rotate by said nozzle (7) so that centrifugal forces acting on the curable viscous plastic material will be slung out from the nozzle (7) and onto the interior surface (24) of the tubular section via peripheral slots (20), said material sub-units being slung out at a rotational velocity (v) corresponding to the speed at which the nozzle rotates.

The material sub-units thrown out by the nozzle are given a speed and a direction relating to a velocity component that is dependent on said rotational motion and to a velocity-related component that is dependent on centrifugal force, wherewith the plastic material sub-units thrown from the nozzle form or are co-ordinated within a hollow cylindrical layer or a collection (E2') exposing low material density and therewith imparted helical motion towards the tubular section (22).

The functional content of this prior patent publication makes clear the necessity of accurately structuring the capacity of the arrangement with regard to the infeed of the sub-units (E1) of the viscous plastic material in relation to the number of slots (20) provided, the vertical and transversal dimensions of the slots and the chosen number of slots so that the plastic sub-units (E1) fed to the nozzle (7) will be in direct relationship with the plastic sub-units that are exerted from the nozzle and radiate outwards via said slots (20), when a plastic material sub-unit (E2') is related to a slot (20) in Figure 2.

Since the illustrated embodiment includes five such slots (20), the control circuits used shall be structured so that the outfeed of plastic material sub-units from a plastic pump will correspond to five times the number of plastic sub-units (E2') slung out per unit of time.

Thus, it can be established that there is a very low concentration of material within the collection of the plastic sub-units (E2') that are thrown out and form a hollow-cylindrical layer against the interior surface (22a) of the tubular section (22) and therewith result in a slow build-up of the viscous plastic coating (24) on the interior surface (22a) of the tubular section, and in very thin layers and at a relatively low speed (F) through the pipe in respect of the rotatable nozzle (7).

References are made in this respect to column 2, lines 53 - 67; column 5, lines 39 - 53; column 5, lines 66 to column 6, line 21 in said patent publication.

The sub-units of the plastic material co-ordinated within the magazine have been identified with the reference sign (E3) and form an upper delimiting surface (E3a), which has been greatly generalised or stylized for the sake of simplification.

### DESCRIPTION OF EMBODIMENTS AT PRESENT PREFERRED

It is pointed out initially that we have chosen to use in the following description of an embodiment that is at present preferred and that includes characteristic features significant of the present invention and illustrated in the Figures of the accompanying drawings special terms and terminology with the primary intention of illustrating the inventive concept more clearly.

It will be noted, however, that the terms and expressions chosen here shall not be seen as being limited solely to those terms and expressions but that each chosen term or expression shall be interpreted as also including all technical equivalents that function in the same or at least essentially the same way so as to achieve or essentially achieve the same purpose and/or technical effect.

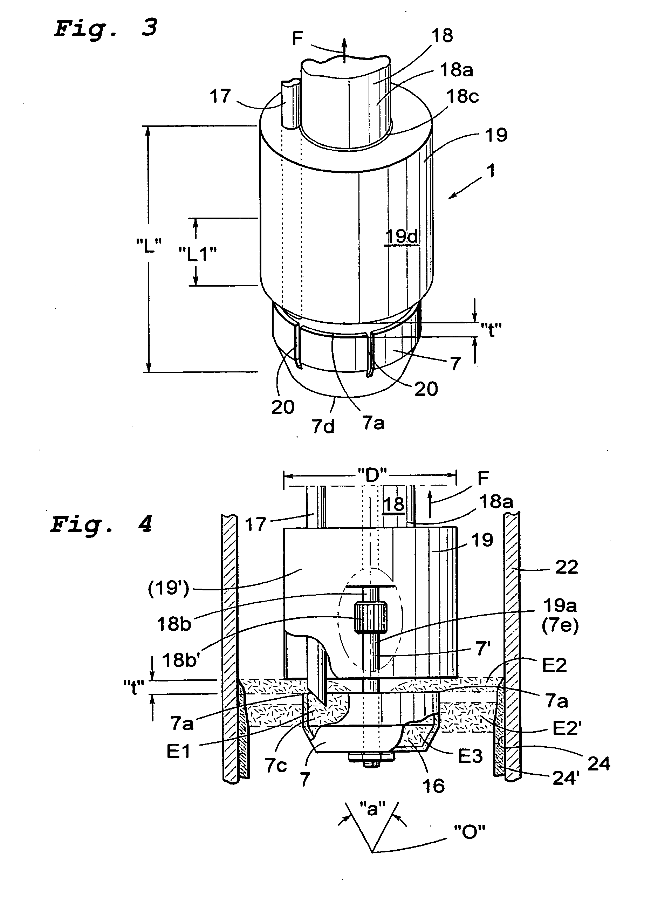

In the accompanying drawings Figures 3 to 9 illustrate schematically and in detail the basic requisites of the present invention where the significant properties of the present invention have been concretised in the form of the embodiments at present preferred and described in more detail in the following text.

Thus, Figure 3 is a perspective illustration of a rotatable nozzle arrangement 1, which typically includes a rotatable nozzle 7 and a bearing unit 19.

The bearing unit 19 may at certain times and in the case of courser pipe dimensions be replaced with a motor unit, e.g. a motor unit (19') driven by compressed air.

The bearing unit 19 or the motor unit (19') has a rotatable axle 19a, which is co-ordinated with the nozzle 7, wherein the nozzle is structured to sling out or spread curable viscous plastic material when rotating within a tubular section 22. The plastic material is slung out in the form of two mutually different collections E2, E2' stored, inter alia, in a magazine 16 in said nozzle 7 from which they are slung against the inner surface of the tubular section 22 such as to create and build-up a thick coating of a plastic material (10).

According to a particular feature of the present invention the infeed of plastic material E1 to the magazine 16 is concentrated onto the peripheral edge 7a of the nozzle 7, this edge is connecting with an inner nozzle wall-portion 7c that has the form of a straight truncated cone or some corresponding configuration.

More particularly, it is proposed that the wall portion 7c shall have a cone angle "a" within the range of 30 - 60°, such as 40 to 50°.

The wall portion 7c includes a number of through-penetrating slots 20, which are primarily structured to converge towards an apex "O" of the truncated conical shape.

The bearing unit 19 has a diameter "D" and is structured to align with the upper, wider and open edge part 7a of the nozzle 7.

The invention is based on the concept of "splitting off' or "slicing of" sub-unit E1 after sub-unit E1 of the material with the aid of the slots 20 and throwing out these sub-units in the form of a lower hollow-cylindrical sub-unit collection E2', where the percentage of the sub-units in said collection E2' will increase in dependence on the increasing rotational speed of the nozzle, an increasing number of slots, an increase in the height and width dimensions of the slots, and the presence of one or more vanes, upstream and/or downstream of respective slots as seen in the direction of rotation.

This hollow-cylindrical collection E2' will in each case expose a lower material density than the plastic material itself, with this material density decreasing with increasing distances between the nozzle periphery and the receiving inner surface of the tubular section.

By delivering sub-units E1 in a surplus quantity, i.e. in a stream of material greater than that required to form said hollow cylindrical collection of sub-units E2', material sub-units E3 will be set into rotation within a nozzle-associated magazine 16 and these rotating sub-units E3 will pass over and overflow the upper edge 7a of the nozzle as a homogenous hollow-cylindrical collection E2, exposing a high material density, which also decreases with increasing distance between the periphery 7a of the nozzle and the inner surface 24 of the tubular section 22, as described more closely in the following text.

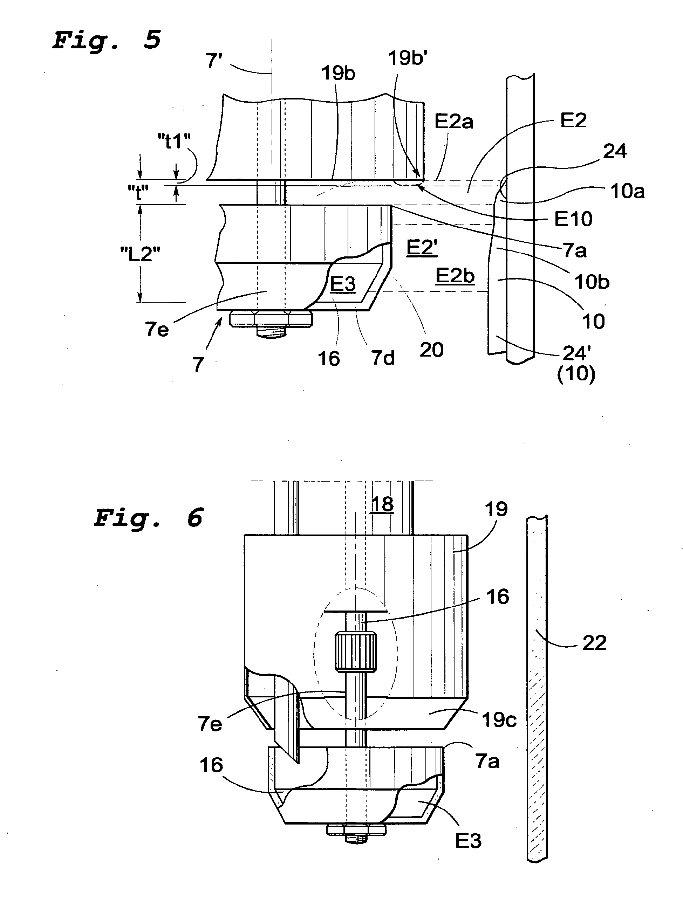

In the case of a first embodiment, illustrated in Figure 4, the surface 19b of the bearing unit 19, that faces towards the nozzle, is flat, whereas in the case of a second embodiment, shown in Figure 6, the surface 19c of the bearing unit, that faces the nozzle, is bevelled.

It will be understood, however, that there is nothing to prevent the surface 19c from having the shape of an upside down basin, so as to present a gap "t" radially outwards.

When the sub-units E2 that are slung from the nozzle shall pass via a gap "t" in the case of a surplus, the upper surfaces E2a of the sub-units E2 are able to strike against and rotate along the periphery 19b' of the surface 19b (see Figure 5).

Heat generated in the bearing unit 19 can be assumed to contribute towards a circular collection of plastic material, referenced E10, and cause blockage of the gap "t" (also shown with broken lines in Figure 5).

Such agglomeration of material E10 can be eliminated when filling of plastic material sub-units E1 and the sub-units thrown out in the collection E2' result in a small surplus for forming the collection E2, where this surplus is chosen so that an air gap "t1" will be formed between the upper surface E2a and the flat surface 19b and its peripheral edge 19b'.

The gap "t" shown here may thus be defined as a chosen distance between said surface 19b of the bearing unit 19 that faces towards the nozzle 7 and the open peripheral edge-part 7a of the nozzle 7.

The gap "t" should therefore be given a dimension that exceeds 2.0 - 5.0 mm, although, on the other hand, evaluations indicate that the gap "t" should be less than 10 mm, such as 7 - 8 mm, in the case of narrower or finer tubular sections 22.

More particularly the bearing unit 19 should be given the smallest possible diameter "D" under prevailing conditions, although the arrangement needs to include means for driving the bearing unit 19 and a feeding pipe 17 for the supply of viscous plastic material sub-units E1 to the nozzle.

A bearing unit 19 which is structured towards minimum measurements and is adapted to the prevailing conditions enables the diameter "D" to be chosen from between 15 and 30 mm, preferably about 20 mm.

With these measurement data regarding the diameter "D" and a length "L" corresponding to (2.0 - 1.0) x D, such as (1.4 - 1.6) x D it is possible to coat effectively the inner surface of a pipe 22 having a diameter within the region of 28 - 50 mm and greater.

With the measurement data given with respect to the nozzle arrangement, it is possible to apply a viscous coating around the inner surface 24 of a pipe section 22 of small pipe diameters or pipe dimensions, whereas in the case of tubular sections of courser diameters or dimensions, such as 100 mm, there is proposed the use of an earlier known nozzle-centring device 23.

In accordance with the invention, this device 23 is applied to and fastened on the outer cylindrical surface 19d of the bearing unit 19 with the aid of fastener means (not shown) within the area referenced "L1".

The plastic material sub-units E2 are intended to be slung out through the gap "t" in response to the rotational movement of the nozzle 7 about its axis of rotation 7' at a speed of between 8 000 and 10 000 rpm and therewith build-up a thick viscous coating on the inner surface 24 of the tubular section 22.

It is also proposed in accordance with the invention, that plastic material sub-units E2' are slung-out via said slots 20.

A selected first sub-unit collection of maximum high material density shall be adapted to pass through the gap "t" as an upper hollow-cylindrical collection E2, while a selected second collection of sub-units of low material density shall be adapted to pass through the through-penetrating slots 20 as a following or a lower hollow-cylindrical collection E2'.

As will be evident from the embodiment described by way of introduction, the ratio between a selected collection of material sub-units E2 exposing a high material density and a selected collection of sub-units E2' exposing a low material density can be achieved selectively by appropriate dimensioning of the gap "t" (or "t" - "t1") and appropriate dimensioning of the slots 20, where the collection of sub-units E2 will increase with increasing measurements of the gap "t" and a reduction in the number of slots and/or a reduction in the cross measurement of the slots 20, or vice versa.

In this case, the through-penetrating slots 20 extend from an open upper edge-part 7a of the nozzle 7 towards and down to a closed bottom part 7d of the nozzle 7.

The slots 20 will beneficially be more than four in number although practical deliberations indicate that they should be fewer than ten.

A pipe 17 for feeding plastic material sub-units E1 is structured to extend through and alongside said bearing unit 19 and a drive 18 structured for said rotation.

To this end there is fastened to the bearing unit 19 a Bowden-cable drive 18, whose casing 18a is fastened to the bearing unit 19 via a sleeve 18c and whose enclosed wire 18b is fastened to a nozzle trunnion 7e via a sleeve 18'.

The nozzle 7 includes a cavity, which functions as a magazine 16, and which have a depth conforming to or smaller than the diameter of the open upper edge part 7a.

Figure 6 illustrates an alternative embodiment of the arrangement shown in Figure 4, wherewith the lower surface part 19b of the bearing unit 19 includes a peripheral bevel 19c, such as to open up the gap "t" peripherally and thereby avoid conglomerations, such as E10.

Instead of a bevel 19c, the lower surface part 19b may be given a basin-like shape.

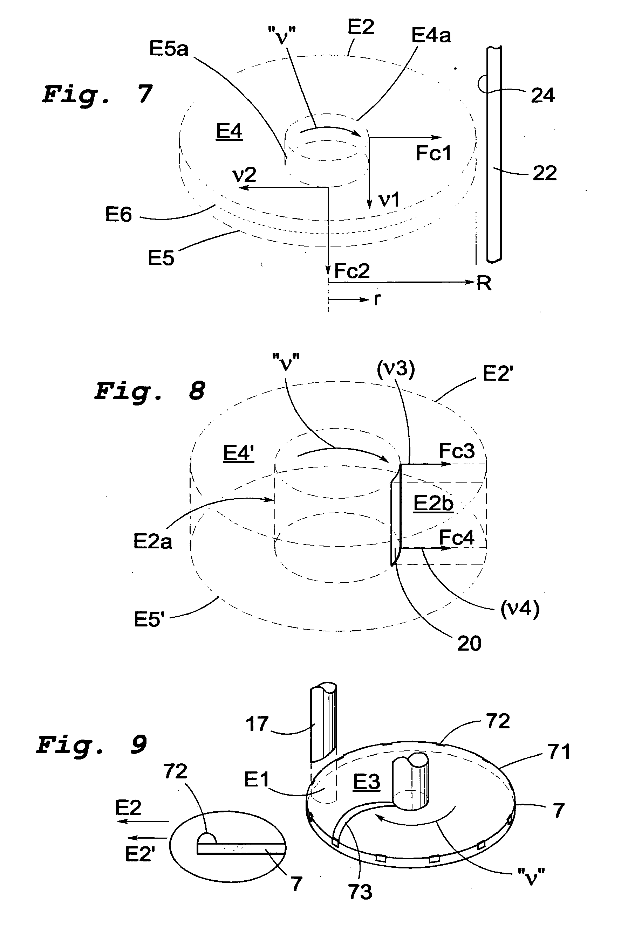

Figure 7 illustrates more theoretical suppositions that will apply to the hollow-cylindrical collection of sub-units E2.

This collection E2 is illustrated as two outer layers, an upper layer E4 and a lower layer E5 and one (single) intermediate layer E6.

The upper layer E4 will have a rotational velocity "v1" which is slightly lower than the rotational velocity "ν2" of the lower layer E5, which is driven by rotation of the nozzle 7.

The centrifugal force "Fc" (calculated as the mass (**m**) x the velocity (ν) squared and divided by the radius (**r**)) acts radially as "Fc1" in respect of the layer E4 and as "Fc2" in respect of the layer E5.

The velocity "v2" can be connected directly to the peripheral speed of the nozzle 7, particularly when the edge 7a of the nozzle is equipped with teeth or some similar devices and material entraining means.

A co-ordination of these layer-related forces, a lesser force "Fc1" related to "v1" in respect of the layer E4 and a larger force "Fc2" related to "v2" in respect of the layer E5, creates a "turbulent" layer E6 that wanders in the direction of rotation "v".

With respect to the material density that occurs it can be assumed that within the area E4a and E5a the material sub-units exist in a material density that corresponds to the sub-units E1 of the plastic material that includes a reinforcing agent.

When these material sub-units within the area E4a and E5a are slung out from a circular surface having a circumference of "**2r x** π" towards and against a circular surface 24 of a tubular section 22, that has a circumference of "**2R x** π", the material density will decrease at the surface 24 by a factor corresponding to "r/R".

With regard to the material density of the hollow-cylindrical configuration of sub-units E2', according to Figure 8, it will be noted that in this case material sub-units are slung out within the area E2a in the form of particle jets and in an upper layer E4' and a lower layer E5', where these layers are co-ordinated via slots 20 to form rectangular "particle jets", referenced E2b.

The centrifugal forces "Fc3" and "Fc4" are substantially of the same magnitude (although the conical shape of the nozzle 7 results in a certain variation).

The participle jets E2b are also influenced by velocity vectors "v2" ach "v4", which are solely indicated.

These velocity vectors "v3" and "v4" are generally of equal magnitudes and have the same direction (although the conical shape of the nozzle 7 results in a certain variation).

When these jet-like material sub-units E2b (structured as rectangles) within the slots 20 are slung out from a circular surface having a circumference of "**2r x** π" towards and against a circular surface 24 of a tubular section 22 having a circumference of "**2R x** π" the material density of the jets will decrease at the surface 24 by a factor of "r/R".

In addition, the density of the material in the collection E2' will be dependent on the number of slots 20 and adapted height and width dimensions of one or more of these slots.

The material density of the collection E2' will also be reduced by n/360°, where "n" represents the number of degrees that can be considered to be included by the width of all slots 20.

The viscous coating 10 on the inner surface 24 of the tubular section, is initially formed by a collection E2 of high material density (r/R) slung from the nozzle, this coating 10a being supplemented with a slung collection E2' of low material density (n · r/360 · R) in the form of particle jets E2b, which will frequently "work" the layer 10a at different energies and additionally from the layer 10b.

Figure 9 is a perspective view of a nozzle 7 whose upwardly facing peripheral edge 71 has recesses 72 corresponding to the slots 20.

The feeding pipe 17 feeds plastic material sub-units E1 towards the peripheral edge 71 of the nozzle and, with the aid of vanes referenced 73, these sub-units E1 and a surplus E3 are slung out as two collections E2, E2' in the same way as that described above.

It has been found beneficial to cause the bearing unit 19 and its co-ordinated nozzle 7 to vibrate. This vibration can be achieved by inserting a means in the form of a wire in the Bowden-cable in a manner to provide a structured clearance in relation to a surrounding casing.

It will be understood that the invention is not restricted to the embodiment given by way of example above, and that modifications within the scope of the inventive concept illustrated in the accompanying claims can be made.

It will be particularly noted that each illustrated unit and/or circuit can be combined with each other illustrated unit and/or circuit within the framework of achieving desired technical functions.

## Claims

1. A rotatable nozzle arrangement that includes a nozzle (7) and a bearing unit (19) or a motor unit, whose rotatable axle (19a) is co-ordinated with said nozzle, wherein as the nozzle (7) rotates within a tubular section (22) it slings a curable viscous plastic material (E2, E2') collected, inter alia, in a nozzle-carried magazine (16) against the interior surface (24) of the tubular section (22) and therewith creates and builds-up a thick layer of material to form a viscous coating (10), an infeed (17) of plastic material (E1; E2; E2') to said magazine (16) being concentrated as a first sub-unit collection (E2') to an inner wall part (7c) of the nozzle (7), wherein said wall part (7c) includes a number of through-penetrating slots (20), **characterised in that** the nozzle further comprises an open upper edge part (7a), which faces the bearing unit (19) or the motor unit, arranged for allowing the plastic material to pass through a gap (t) formed between the nozzle and the bearing unit (19) or the motor unit.

2. An arrangement according to claim 1, **characterised in that** said wall part has a cone angle within the range of 30 - 60°.

3. An arrangement according to claim 1, **characterised in that** the slots are structured to converge towards an apex (0) of a straight truncated conical shape.

4. An arrangement according to claim 1, **characterised in that** the bearing unit has a diameter (D) that is adapted to conform to the upper, wider and open edge part (7a) of the nozzle.

5. An arrangement according to claim 4, **characterised in that** a surface (19b) of the bearing unit (19), that faces towards the nozzle, is flat.

6. An arrangement according to claim 1, **characterised in that** the periphery of the surface (19c) of the bearing unit, that faces towards the nozzle, is bevelled or has a hemi-spherical shape.

7. An arrangement according to claim 1, **characterised by** a gap (t) which is defined by a spaced relationship between a surface (19b) of the bearing unit that faces towards the nozzle, and an open edge part (7a) of the nozzle, said spacing exceeding 2.0 mm.

8. An arrangement according to claim 7, **characterised in that** said spacing is less than 10 mm.

9. An arrangement according to claim 1 or 4, **characterised in that** the bearing unit has a diameter (D) of between 15 and 30 mm, preferably about 20 mm.

10. An arrangement according to claim 1, **characterised in that** a first collection (E2), exposing a high material density, is able to pass through a gap (t) and a second collection (E2'), exposing a low material density, is able to pass through said slots (20).

11. An arrangement according to claim 1 or 10, **characterised in that** through-penetrating slots are structured to extend from an open upper edge-part (7a) of the nozzle towards and to a closed bottom part (7d) thereof.

12. An arrangement according to claim 1, **characterised by** a feeding pipe (17), for the delivery of plastic material sub-units (E1), is extending through and along a side of the bearing unit (19).

13. An arrangement according to claim 1, **characterised in that** the bearing unit (19) is co-ordinated with a Bowden-cable, whose casing (18a) is fastened to the bearing unit (19) and whose wire (18b) is fastened to a nozzle trunnion (7e).

14. An arrangement according to claim 1, **characterised in that** the nozzle (7) includes a cavity (16), which functions as a magazine, and which has a depth that conforms with, although smaller than, the diameter of an open upper edge-part (7a) of the nozzle.

15. An arrangement according to claim 1 or 13, **characterised in that** a wire and a casing of a Bowden-cable assembly are mutually dimensioned to cause the bearing unit to vibrate in response to a rotation of the wire.

16. An arrangement according to claim 1, **characterised in that** the infeed (17) of plastic material is concentrated towards the open edge part (7a) of the inner wall part (7c) of the nozzle.

## Patentansprüche

1. Drehbare Mundstückanordnung, welche ein Mundstück (7) und eine Lagerungseinheit (19) oder eine Motoreinheit umfasst, deren drehbare Achse (19a) mit des Mundstücks koordiniert ist, wobei das Mundstück, wenn es sich innerhalb eines röhrenförmigen Abschnitts (22) dreht, ein härtbares viskoses Kunststoffmaterial (E2, E2'), welches unter Anderem in einem vom Mundstück gehaltenen Vorratsbehälter (16) aufgenommen wird, gegen die Innenfläche (24) des röhrenförmigen Abschnitts (22) schleudert und damit eine dicke Materialschicht erzeugt und aufbaut, um eine viskose Beschichtung (10) zu bilden, wobei eine Beschickung (17) des Vorratsbehälters (16) mit Kunststoffmaterial (E1; E2; E2') als eine erste Teilcharge (E2') auf einen Innenwandabschnitt (7c) des Mundstücks (7) konzentriert wird, wobei der Wandabschnitt (7c) eine Anzahl von durchführenden Schlitzen (20) umfasst, **dadurch gekennzeichnet, dass** das Mundstück ferner einen offenen oberen Randabschnitt (7a) umfasst, welcher auf die Lagerungseinheit (19) oder die Motoreinheit zeigt und dafür eingerichtet ist zu ermöglichen, dass das Kunststoffmaterial durch einen Spalt (t) hindurch gelangt, welcher zwischen dem Mundstück und der Lagerungseinheit (19) oder der Motoreinheit ausgebildet ist.

2. Anordnung nach Anspruch 1, **dadurch gekennzeichnet, dass** der Wandabschnitt einen Kegelwinkel im Bereich von 30° bis 60° aufweist.

3. Anordnung nach Anspruch 1, **dadurch gekennzeichnet, dass** die Schlitze so strukturiert sind, dass sie auf einen Scheitelpunkt (O) einer geraden Kegelform mit abgeflachter Spitze konvergieren.

4. Anordnung nach Anspruch 1, **dadurch gekennzeichnet, dass** die Lagerungseinheit einen Durchmesser (D) aufweist, der so eingestellt ist, dass er auf den oberen, breiteren und offenen Randabschnitt (7a) des Mundstücks angepasst ist.

5. Anordnung nach Anspruch 4, **dadurch gekennzeichnet, dass** eine Fläche (19b) der Lagerungseinheit (19), die auf das Mundstück zeigt, eben ist.

6. Anordnung nach Anspruch 1, **dadurch gekennzeichnet, dass** der Rand der Fläche (19c) der Lagerungseinheit, die auf das Mundstück zeigt, abgeschrägt ist oder eine Halbkugelform aufweist.

7. Anordnung nach Anspruch 1, **gekennzeichnet durch** einen Spalt (t), welcher **durch** eine Abstandsbeziehung zwischen einer Fläche (19b) der Lagerungseinheit, die auf das Mundstück zeigt, und einem offenen Randabschnitt (7a) des Mundstücks definiert ist, wobei der Abstand mehr als 2,0 mm beträgt.

8. Anordnung nach Anspruch 7, **dadurch gekennzeichnet, dass** der Abstand weniger als 10 mm beträgt.

9. Anordnung nach Anspruch 1 oder 4, **dadurch gekennzeichnet, dass** die Lagerungseinheit einen Durchmesser (D) von 15 bis 30 mm, vorzugsweise etwa 20 mm aufweist.

10. Anordnung nach Anspruch 1, **dadurch gekennzeichnet, dass** eine erste Charge (E2), welche eine hohe Materialdichte aufweist, durch einen Spalt (t) hindurch gelangen kann und eine zweite Charge (E2'), welche eine geringe Materialdichte aufweist, durch die Schlitze (20) hindurch gelangen kann.

11. Anordnung nach Anspruch 1 oder 10, **dadurch gekennzeichnet, dass** die durchführenden Schlitze so strukturiert sind, dass sie sich von einem offenen oberen Randabschnitt (7a) des Mundstücks in Richtung auf einen geschlossenen unteren Abschnitt (7d) derselben und bis zu diesem erstrecken.

12. Anordnung nach Anspruch 1, **dadurch gekennzeichnet, dass** sich ein Beschickungsrohr (17) zum Zuführen von Kunststoffmaterial-Teilchargen (E1) durch eine Seite der Lagerungseinheit (19) hindurch und an dieser entlang erstreckt.

13. Anordnung nach Anspruch 1, **dadurch gekennzeichnet, dass** die Lagerungseinheit (19) mit einem Bowdenzug koordiniert ist, dessen Mantel (18a) an der Lagerungseinheit (19) befestigt ist und dessen Seele (18b) an einem Mundstückzapfen (7e) befestigt ist.

14. Anordnung nach Anspruch 1, **dadurch gekennzeichnet, dass** das Mundstück (7) einen Hohlraum (16) umfasst, welcher als Vorratsbehälter fungiert und welcher eine Tiefe aufweist, die, wenngleich kleiner als dieser, an den Durchmesser eines offenen oberen Randabschnitts (7a) des Mundstücks angepasst ist.

15. Anordnung nach Anspruch 1 oder 13, **dadurch gekennzeichnet, dass** eine Seele und ein Mantel eines Bowdenzugaufbaus wechselseitig so abgemessen sind, dass sie bewirken, dass die Lagerungseinheit in Reaktion auf eine Drehung der Seele schwingt.

16. Anordnung nach Anspruch 1, **dadurch gekennzeichnet, dass** die Kunststoffmaterialbeschickung (17) in Richtung auf den offenen Randabschnitt (7a) des Innenwandabschnitts (7c) des Mundstücks konzentriert ist.

## Revendications

1. Disposition de buse rotative comprenant une buse (7) et un ensemble support (19) ou un ensemble moteur dont l'axe rotatif (19a) est coordonné avec ladite buse, dans laquelle la buse (7), à mesure qu'elle tourne à l'intérieur d'une section tubulaire (22), projette une matière plastique visqueuse trempante (E2, E2'), reçue entre autres dans un magasin porté par la buse (16), contre la surface intérieure (24) de la section tubulaire (22) et crée et accumule ainsi une couche épaisse de matière afin de former un revêtement visqueux (10), une alimentation (17) de matière plastique (E1 ; E2 ; E2') audit magasin (16) étant concentrée sous la forme d'une première fraction d'accumulation (E2') sur une partie de paroi interne (7c) de la buse (7), ladite partie de paroi (7c) comprenant une pluralité de fentes traversantes (20), **caractérisée en ce que** la buse comprend en plus une partie de bord supérieur ouvert (7a) qui fait face à l'ensemble support (19) ou à l'ensemble moteur, disposée de manière à permettre à la matière plastique de passer dans un espace (t) formé entre la buse et l'ensemble support (19) ou l'ensemble moteur.

2. Disposition selon la revendication 1, **caractérisée en ce que** ladite partie de paroi présente un angle conique dans la plage de 30° à 60°.

3. Disposition selon la revendication 1, **caractérisée en ce que** les fentes sont structurées de façon à converger en direction d'un sommet (O) d'une forme conique tronquée droite.

4. Disposition selon la revendication 1, **caractérisée en ce que** l'ensemble support a un diamètre (D) qui est adapté pour se conformer à la partie de bord supérieur ouvert (7a) et plus large de la buse.

5. Disposition selon la revendication 4, **caractérisée en ce qu'**une surface (19b) de l'ensemble support (19) orientée en direction vers la buse est plane.

6. Disposition selon la revendication 1, **caractérisée en ce que** la périphérie de la surface (19c) de l'ensemble support orientée en direction vers la buse est biseautée ou présente une forme hémisphérique.

7. Disposition selon la revendication 1, **caractérisée par** un espace (t) qui est défini par une relation d'écartement entre une surface (19b) de l'ensemble support orientée en direction vers la buse et une partie de bord ouvert (7a) de la buse, ledit écartement étant supérieur à 2,0 mm.

8. Disposition selon la revendication 7, **caractérisée en ce que** ledit écartement est inférieur à 10 mm.

9. Disposition selon la revendication 1 ou 4, **caractérisée en ce que** l'ensemble support à un diamètre (D) dans la plage de 15 à 30 mm, de préférence égal à 20 mm environ.

10. Disposition selon la revendication 1, **caractérisée en ce qu'**une première fraction d'accumulation (E2) présentant une densité de matière élevée peut passer dans un espace (t) et une deuxième fraction d'accumulation (E2') présentant une faible densité de matière peut passer dans lesdites fentes (20).

11. Disposition selon la revendication 1 ou 10, **caractérisée en ce que** les fentes traversantes sont structurées de façon à s'étendre depuis une partie de bord supérieur ouvert (7a) de la buse en direction de et jusqu'à une partie inférieure fermée (7d) de ladite buse.

12. Disposition selon la revendication 1, **caractérisée par** un tuyau d'alimentation (17), servant à délivrer des fractions de matière plastique (E1), qui s'étend dans et le long d'un côté de l'ensemble support (19).

13. Disposition selon la revendication 1, **caractérisée en ce que** l'ensemble support (19) est coordonné avec un câble Bowden dont la gaine (18a) est fixée à l'ensemble support (19) et dont le fil (18b) est fixé à un tourillon (7e) de la buse.

14. Disposition selon la revendication 1, **caractérisée en ce que** la buse (7) comporte une cavité (16) qui fait fonction de magasin et qui a une profondeur correspondant au diamètre d'une partie de bord supérieur ouvert (7a) de la buse mais inférieure audit diamètre.

15. Disposition selon la revendication 1 ou 13, **caractérisée en ce qu'**un fil et une gaine d'un ensemble câble Bowden sont mutuellement dimensionnés de manière à faire vibrer l'ensemble support en réponse à une rotation du fil.

16. Disposition selon la revendication 1, **caractérisée en ce que** l'alimentation de matière plastique (17) est concentrée en direction vers la partie de bord ouvert (7a) de la partie de paroi interne (7c) de la buse.
